(19)

**Europäisches Patentamt**

**European Patent Office**

**Office européen des brevets**

(11) **EP 4 636 976 A1**

(12) **EUROPEAN PATENT APPLICATION**

(43) Date of publication:
22.10.2025 Bulletin 2025/43

(21) Application number: 25170088.6

(22) Date of filing: 11.04.2025

(51) International Patent Classification (IPC):
*H02J 3/32* (2006.01)     *H02J 3/00* (2006.01)
*H02J 3/14* (2006.01)     *H02J 3/38* (2006.01)

(52) Cooperative Patent Classification (CPC):
**H02J 3/32;** H02J 3/008; H02J 3/14; H02J 3/381;
H02J 2203/10; H02J 2300/20; H02J 2300/40;
H02J 2310/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.04.2024 IT 202400008335**

(71) Applicant: **Energy S.p.A.**
**38068 Rovereto (TN) (IT)**

(72) Inventor: **SAGGIO, Alberto**
**38068 ROVERETO (Trento) (IT)**

(74) Representative: **Anselmi, Davide**
**Bugnion S.p.A.**
**Via Pancaldo, 68**
**37138 Verona (IT)**

(54) **METHOD AND SYSTEM FOR MANAGING SHARED ENERGY RESOURCES IN AN ENERGY COMMUNITY**

(57)     A method and system for managing shared energy resources in an energy community, wherein said energy community comprises a plurality of users (20) having one or more items of electrical equipment to be powered. Said energy community defining a DER system and comprising shared batteries (2) for storing electrical energy/power and an apparatus (30) for the production of electrical energy/power, preferably renewable, connected with said batteries (2) so that the electrical energy/power produced can be stored in said batteries (2). The method comprises: assigning to each of the users a virtual share of electrical energy production and a virtual share of storage of electrical energy of said shared batteries; calculating the total energy/power that the community exchanges with an electrical grid and a control step carried out in the following manner: discharging into the grid (100) the energy/power stored in the batteries (2) so as to decrease the value of energy/power stored in the batteries (2) (in order to increase the total energy/power exchanged; charging the batteries (2) by means of said apparatus (30) for the production of electrical energy/power so as to increase the value of energy/power stored in the batteries (2) in order to lower the total energy/power exchanged.

Fig. 1

EP 4 636 976 A1

## Description

### Technical field

The present invention relates to a method and a system for managing distributed energy resources (DERs) in one or more self-consumption energy communities, which envisage a fair remuneration for the energy contributions of the individual users and the supply of ancillary services.

In particular, the present invention fits into the sector of renewable energy communities which share a storage of electrical energy (or set of electrical batteries) that can be used by one or more of the individual users making up the community.

The term "energy community" means a group of users who cooperate in the production, management and sharing of electrical energy through the use of DERs with the aim of improving environmental sustainability, collective self-consumption and the remuneration from the supply of ancillary services.

More generally, the present invention fits into all sectors where there is a benefit from the aggregate management of DERs according to community (or aggregate) objectives oriented towards collective self-consumption and/or the supply of ancillary services. In this regard, the present invention allows for maintaining the benefits of the aggregate management of DERs while adding the large advantage of centralising energy resources in a single system (environmental impact, costs, maintenance, risks, logistics, etc.) and effectively introducing the concept of VDERs (virtually distributed energy resources). For example, the solution is easily integrated into the three configurations most typical of energy communities, namely:

- community of users with individual connections to the public grid, where exchanges take place through interaction with the grid itself according to agreements depending on the local energy community regulations and the energy supplier and distributor;
- community of users connected in an "island" and thus for the purpose of collective self-consumption and the subdivision of costs;
- community of users with a single connection to the public grid and an internal network for exchanging energy among users and sharing the DERs (embedded networks).

### Prior art

To date, systems for managing energy communities have been theorised which provide for associating, through virtualisation, a fraction of both the production plant and the energy storage system with every user, who, as a consequence, will have at their disposal a corresponding share of the energy produced and stored to cover their energy consumption.

However, the system is based on a concept of virtualisation derived from "cloud computing", that is, founded on the personal, direct advantage of the individual user without considering or promoting the collective control logics that are advantageous for energy communities, as they can maximise common income and savings which can then be divided among users based on their contributions. In particular, reference is made to mechanisms for incentivising collective self-consumption - which vary in every state based on local regulations - and the earnings obtainable from the supply of ancillary services on an aggregate basis. For example, if the share of one or more users is not sufficient to satisfy their needs, the system provides for evaluating whether it is possible to make an exchange within the community at prices lower than those of their utility supply contract and, if not, drawing electrical energy from the external distribution grid; all this without considering the community energy needs, the maximisation of collective self-consumption (and the related incentives) or the possibility of delivering future ancillary services (which require prior storage of energy).

Similarly, in the case of an individual energy surplus, the user can input their excess stored electrical energy to the external electricity grid and earn a corresponding remuneration based on the predetermined terms and conditions of the contract with the utility company, but again without considering the possible use, at a community level, of the aforesaid input energy.

A further difficulty not analysed by the virtualisation systems theorised to date is that of implementing individual virtual behaviour - that is, of instantaneously and efficiently controlling the charging and discharging of shared batteries - in a continuous manner and precisely following the variations in the energy consumption curve of individual users. In particular, as real control over shared battery storage depends on complex virtual logics that need to be calculated in real time from the energy profiles of users, the control cycle introduces delays that are hard to manage and lead to non-optimal behaviours of the system. In the light of the foregoing, the energy community presently has several needs, described below:

- the state of health (SoH) of batteries must be kept at the highest possible level (which means, for example, carrying out as few charging/discharging cycles as possible);

- the energy drawn from the electrical grid must be reduced to a minimum in order to favour collective self-consumption, which usually has lower energy costs compared to the cost of external electricity coming from the grid and can further be incentivised based on local regulations;
- the state of charge (SoC) of the batteries, at a community level, must be managed based on the provision of "ancillary" or auxiliary services (e.g. for making electrical energy available externally for the purposes of the regulation and/or provision of external energy support). By way of example, it might be necessary to have an SoC greater than 80% at a certain time for the provision of ancillary services;
- the cost incurred and remuneration obtained by users in the energy community must be as fair as possible, i.e. based on the actual contribution of users with respect to the various expense/income items.

In this perspective, the known systems for managing energy communities often do not assure an efficient management of energy resources, at least in relation to the abovementioned objectives.

Furthermore, the present mechanisms for the distribution of storage systems among users consider only the energy distribution of the total capacity without considering that, physically, every storage battery is characterised by a maximum deliverable power (during charging and discharging) which necessarily needs to be in turn shared, distributed and, potentially, exchanged among users.

## Aims of the present invention

In this situation, the aim of the present invention is to provide a method and a system for managing distributed, shared energy resources, with a particular focus on the management of shared electrical batteries (i.e. the main resource in terms of energy flexibility) in one or more energy communities based on collective self-consumption and the provision of ancillary services, which can overcome the aforementioned drawbacks.

In particular, it is an aim of the present invention to provide a method and system for managing distributed, shared energy resources (also including shared electrical batteries) in one or more energy communities which allows for optimising the management of the energy of collective self-consumption compared to that which may be drawn from the external electrical grid.

It is in particular an aim of the present invention to provide a method and a system for managing distributed, shared energy resources (also including shared electrical batteries) in one or more energy communities which allow for optimising the management of the state of charge of the shared batteries.

Moreover, it is a further aim of the present invention to decouple the logics of real control of storage, which must be implemented in real time and continuously, from the logics of remuneration of the individual users, which may be on a daily or monthly basis and should wholly exploit the mechanism of virtualisation to ensure energy justice within the community.

The stated aims are substantially achieved by a method and a system for managing distributed, shared energy resources according to what is described in the appended claims.

## Brief description of the figures

Additional features and advantages of the present invention will emerge more clearly from the detailed description of some preferred, but not exclusive, embodiments of a method and system for managing distributed, shared energy resources in one or more energy communities as illustrated in the appended drawings, in which:

- figure 1 shows, in a schematic view, an example of application of the system and method according to the present invention;
- figure 2 shows a part of the management relating to the control of real shared DERs (storage and production) according to the present invention;
- figure 3 shows a part of the management relating to the identification of the virtual energy transactions of users vis-à-vis the community according to the present invention;
- figure 4 shows a graph of the energy available in a given time interval of the day with reference to the share of energy assigned to a user (without considering the power deliverable in the interval).

## Detailed description of one or more preferred embodiments according to the present invention

With reference to the aforementioned figures, the reference number 1 globally indicates a schematic example of a system for managing distributed, shared energy resources which comprise shared electrical batteries 2 in one or more energy communities according to the present invention.

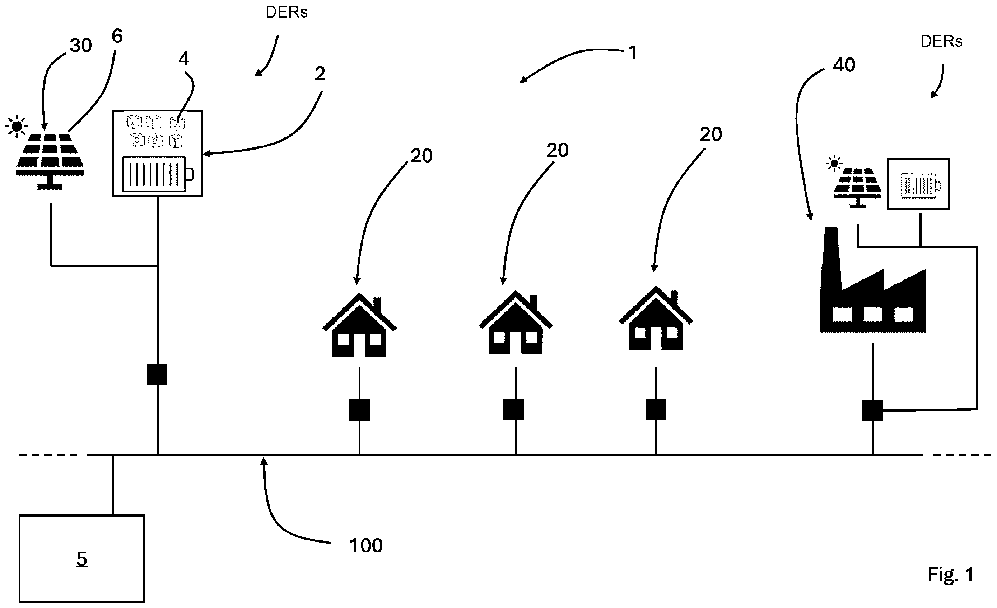

As may be seen in figure 1, an energy community is made up of a group of users 20 who share, through the electrical grid 100, energy resources including a storage 2 of electrical energy, and an apparatus 30 for the production of electrical energy, wherein each of the users 20 has one or more items of electrical equipment or loads to be powered.

The apparatus 30 for the production of electrical energy is preferably of the renewable type and, even more preferably, a photovoltaic system.

Furthermore, each of the users 20 of the community is assigned a respective share 4 of storage 2 (represented by cubes in figure 1) of electrical energy and a respective share 6 of production. It should be noted that said share 4 of storage is preferably a "virtualisation" carried out by software that manages the batteries 2 in such a way as to assign a variable share 4 (e.g. 2kWh or 3kWh or more) irrespective of the physical structure with which the batteries 2 are made.

It should be noted that said "virtualisation" is not carried out in real time, but rather daily/monthly using real data (not forecasts) of the users and the DERs based on well-defined shares that may be modified over time.

A similar argument applies for the part of production 30, which comprises different virtual portions of production, each assigned to a respective user 20.

It should be further noted that the share 4 of storage involves two types of assignment, which need not be correlated with each other:

- a relative share of electrical energy that refers to a total predefined amount of electrical energy assigned to the user 20;
- a relative share of maximum electrical power deliverable in every time instant irrespective of the quantity of stored electrical energy, which refers to a total amount of predefined deliverable power assigned to the user 20 and can be different during charging and discharging.

Figure 1 represents a control unit 5 that manages the supply of electrical energy from the batteries 2 to the users 20 and the input into/drawing from the external electrical grid 100 based on predefined logics.

Some of these logics are an object of the present invention which, in any case, regards the entire electrical energy supply system.

The management method proposed by the present invention can be subdivided into four macro steps:

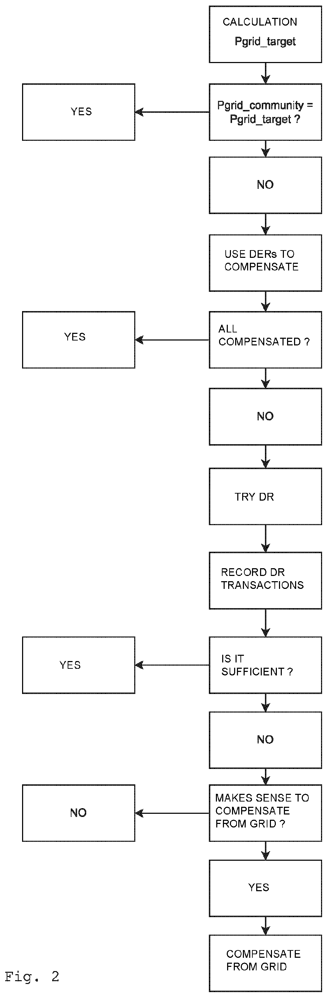

the first dedicated to the description of the control logics for the real shared DERs (storage and production),
the second focused on the logics used to virtualise the behaviour of the individual users 20,
the third centred on the logics of identification of the virtual energy transactions of users in favour of the community and, finally,
the fourth dedicated to the logics of remuneration of the individual users 20 based on the energy contributions provided to the community. As regards the first macro step (figure 2), the method provides for calculating the total energy $E_{grid\_community}$ that the community exchanges with an electrical grid 100 for the supply of electrical energy, to which the users, the batteries and the apparatus 30 for the production of electrical energy are connected.

It should be noted right away that the references to energy in the present description can be equivalently reformulated in terms of electrical power as set forth in the claims, where reference is made to energy or power with the expression "energy/power" (for example, power is monitored in the actual controls). Therefore, the formulas and references that follow refer indistinctly to electrical energy or power.

The total energy is calculated according to the following formula: $E_{grid\_community} = \Sigma\, E_{grid\_i} + E_{prod} - E_{batt}$, where $E_{grid\_i}$ is the energy exchanged with the grid 100 by an i-th user, $E_{prod}$ is the energy produced by the apparatus 30 for the production of electrical energy, $E_{batt}$ is the energy stored in the batteries which, preferably, represents the instantaneous rate exchanged with the batteries 2.

Hereafter, the method provides for comparing the total energy exchanged with the grid 100 with a target $E_{grid\_target}$ or range of energy exchanged with the grid 100 to be reached.

Following this comparison, if the total energy exchanged with the grid 100 is different from said target or range $E_{grid\_target}$, the method provides for controlling said energy community so as to ensure that the total energy $E_{grid\_community}$ exchanged with the grid 100 comes near to or is equal to said target or range $E_{grid\_target}$ irrespective of the exchanges taking place between the individual virtual shares of production and storage in relation to the electrical grid 100.

In particular, this control step is carried out in the following manner:

○ discharging into the grid 100 the energy stored in the batteries 2 so as to decrease the value of energy stored in the batteries 2 $E_{batt}$ in order to increase the total energy exchanged Egrid_community;
○ charging the batteries 2 by means of said apparatus 30 for the production of electrical energy so as to increase the value of energy stored in the batteries 2 $E_{batt}$ in order to lower the total energy exchanged $E_{grid\_community}$;
○ optionally, disconnecting the apparatus 30 for the production of electrical energy from the electrical grid 100 so as to decrease the value of energy produced by the apparatus 30 $E_{prod}$ in order to decrease the total energy exchanged Egrid_community.

Practically speaking, this first macro step uses a system control logic for appropriately controlling the DERs via charging, discharging (batteries 2) and disconnection (production) commands. The algorithm presented is one of the possible ones that can be utilised and uses in its calculations:

- the current operating mode of the system (e.g. self-consumption, SoC setpoint, ancillary service);
- the real-time consumption data for users in the community.

The assumed operating modes reflect the community target the system is currently pursuing and the relevant calculations necessary to define which value of community power exchanged with the external grid 100 $P_{grid\_target}$ should be pursued in order to reach that target. In particular, in the case of operation to maximise self-consumption, the system will impose a $P_{grid\_target}$ equal to zero, whereas in the case of an ancillary service $P_{grid\_target}$ will be equal to the value required by the service $P_{sv\_ancillary}$ and, finally, in the case of operation before an ancillary service according to a SoC setpoint - i.e. when it is necessary to verify and ensure that in the future there will be a certain reserve or state of charge SoC needed to deliver the service - $P_{grid\_target}$ will be calculated using consumption and production forecasts at a community level and the current system status.

Once the $P_{grid\_target}$ has been calculated, the method provides for verifying whether the power currently exchanged by the community $P_{grid\_community}$ with the external grid 100 is equal to it. If it is, being in the desired condition, it will only be necessary to continue monitoring the $P_{grid\_community}$ in order to react to any deviations.

If, on the other hand, the $P_{grid\_community}$ differs from the $P_{grid\_target}$, it will be necessary to undertake possible corrective actions, in order of effectiveness and impact:

- use of the DERs by charging/discharging the batteries 2 and/or disconnecting the production apparatus 30;
- involvement of users by means of notifications (for example via a dedicated mobile app) asking them to change their consumption according to a remunerated demand response (DR) mechanism;
- use of the external grid 100 to draw/input the corresponding amount of deficit/surplus and after assessment of the economic advantage.

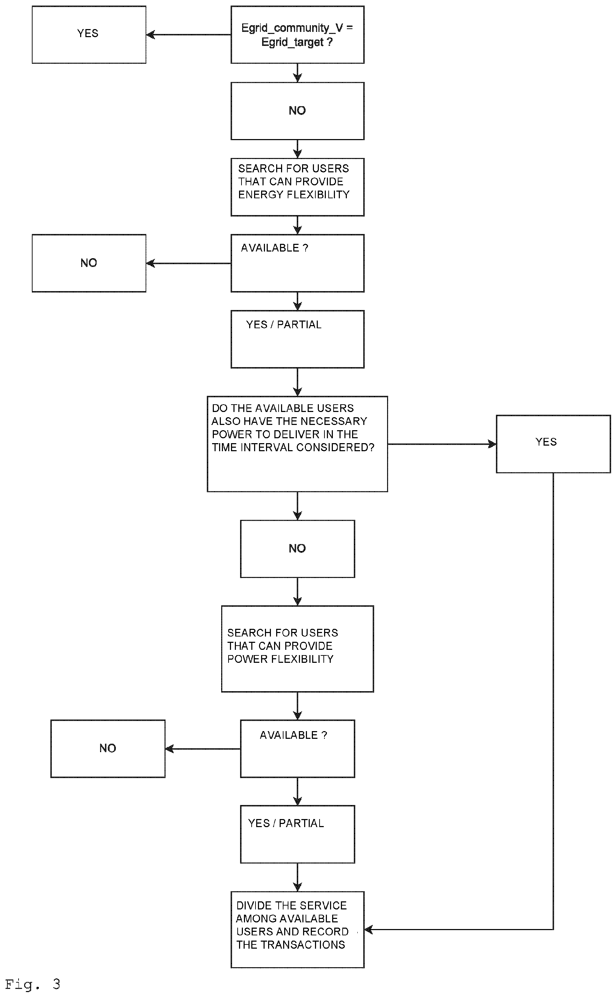

The second macro step (figure 3) introduces the concept of virtualisation of DERs into VDERs, i.e. in resources virtually available to satisfy the energy needs of individual users 20. In particular, a self-consumption logic is assumed, and a calculation is made of the values necessary in the subsequent steps both to define the energy transactions among customers, and to distribute the remuneration and expenses among them. Whereas in the first step the monitoring of real DERs was necessarily carried out in real time, as it determined the community's interaction with the external electrical grid 100, the logics of virtualisation do not influence the aggregate behaviour of the community with the outside and can be implemented with frequencies depending on technical and/or contractual necessities.

In particular, the method provides for a step of exchange between the shares 4 of energy and/or power of the individual users within the energy community according to the energy needs of the individual user.

Furthermore, the exchange of electrical power between the shares 4 of the individual users within the energy community takes place according to the electrical power delivery needs of the individual user.

In particular, assuming that users 20 are provided with a mobile app capable of showing their virtual behaviour as consumers, calculations of the main parameters could be updated every fifteen minutes or more. For the purpose of remuneration and transactions, however, the calculations of the relevant parameters can also be performed daily or monthly (we will assume daily hereafter).

The method further provides for initially calculating, for every user 20 and for every relevant time interval according to utility supply contracts (typically a quarter of an hour):

- the virtual energy produced $E_{prod\_v}$ by simple subdivision of the total produced in the time interval by the DERs according to the share 4 of the user 20;
- the virtual energy delivered or stored $E_{batt\_v}$ by the share 4 of battery storage 2 and using the average share 4 of power of the batteries 2 in the time interval;
- The energy virtually exchanged with the grid 100 in the time interval $E_{grid\_v}$.

In particular ($E_{consv}$ is the virtual energy consumed):

$$E_{batt_V} = \begin{cases} -\min\left(E_{cons_V} - E_{prod_V}, E_{storable}\right), & E_{prod_V} < E_{cons} \; i.e.\; batteries\; discharging \\ \min\left(E_{prod_V} - E_{cons_V}, E_{deliverable}\right), & E_{prod_V} \geq E_{cons} \; i.e.\; batteries\; charging \end{cases}$$

Wherein $E_{storable}$ is equal to the energy obtained by applying the share 4 of maximum charge power in the desired time interval if that quantity does not result in an excess of the share 4 of storage 2 of the user 20, otherwise it will be equal to the energy that can still be stored until saturation of the share. Similarly, $E_{deliverable}$ is the energy dischargeable through the maximum share 4 of discharge power in the time interval if that value is available in the share 4 of storage 2 of the user 20, otherwise it will be equal to the energy that can be delivered until the share has been exhausted.

The energy virtually exchanged with the grid 100 can be easily calculated as (conventionally, use is made of a negative $E_{grid\_V}$ in the event of energy drawn from the grid and a positive one in the case of the input of energy, whereas $E_{batt\_V}$ is assumed to be negative when a battery is being discharged and positive when it is being charged) :

$$E_{grid_V} = E_{prod_V} - E_{cons} - E_{batt_V}$$

**Furthermore,** the virtual state of charge SoCv and the related energy available in the share 4 of storage 2 in every time instant $E_{avail\_V}$ can be easily calculated by adding together the virtual energy contributions from the battery. In the case of slight natural deviations between the energy actually and virtually delivered by the batteries 2, there may be small periodic corrections (e.g. daily) based on the shares 4.

Subsequently, for every user and every time interval, the method provides for calculating the following flexibility values:

- $E_{flex\_discharge\_V}$, i.e. the discharge energy that can be supplied to other users in the community (energy flexibility in discharging);
- $E_{flex\_charge\_V}$, i.e. the charge energy that can be received from other users in the community (energy flexibility in charging);
- $P_{flex\_discharge\_V}$, i.e. the maximum average discharge power that can be transferred to other users in the community (power flexibility in discharging);
- $P_{flex\_charge\_V}$, i.e. the maximum average charge power that can be transferred to other users in the community (power flexibility in charging).

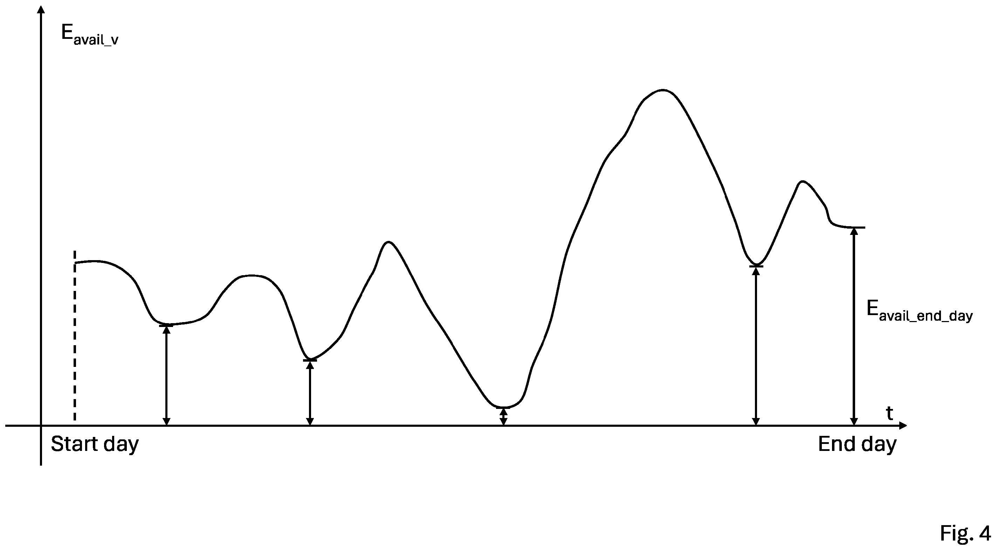

In particular, $E_{flex\_discharge\_V}$ can be calculated based on the energy available at the end of the day $E_{avail\_end\_day}$ (assuming a daily calculation) in the share 4 of the user 20 using an algorithm that, beginning from the end of the day and iterating towards the start, searches for the minimum values of $E_{avail}$ in order to assign them as flexibility in the previous time intervals and ensure that a transfer of energy does not render the user unable to cover future consumption (figure 4).

The value of $E_{flex\_charge}$ can be similarly calculated based on the storable energy $E_{storable\_end\_day}$ at the end of the day in the share 4 of the user 20.

This calculation shows a further advantage of the proposed decoupling between the actual control of the system and virtualisation of the system in terms of energy justice within the community: as flexibility is calculated based on real observed daily consumption data rather than on forecasts, the use thereof in energy transactions and subsequent remuneration logics will be extremely fair.

$P_{flex\_discharge}$ and $P_{flex\_charge}$ may, on the other hand, be calculated for every user and for every time instant as a simple subtraction between the share 4 of maximum charge/discharge power and the actual average power used by the user in that interval.

In accordance with one aspect of the present invention, the share 4 of storage 2 and/or share 6 of production is variable over time according to the producers-users 40 (e.g. industrial plant in figure 1) who are part of the energy community and who make their production and storage of energy available in given periods of time (for example only on Saturdays or Sundays, when the plant is not operational).

In such a case, the shares 4 of storage 2 and/or share 6 of production are recalculated as a function of this.

A third macro step allows for identifying the virtual energy transactions of users in favour of the community. The method proposed in figure 3 is one of those possible and exploits the data of the exchange with the virtual grid 100 of users $E_{grid\_V}$ and flexibility data calculated in the previous step in order to distribute among users corrective actions to address the actual deviation between $P_{grid\_community}$ and $P_{grid\_target}$ described in the first step. The method is used for every time interval (typically quarter-hour intervals) and provides for verifying whether the energy exchanged with the virtual grid 100 by the community $E_{grid\_community\_V}$ coincides with the value necessary to the community in order to reach the pre-established targets (e.g. collective self-consumption, ancillary service, SoC setpoint). In particular, $E_{grid\_community\_V}$ is obtainable in every time interval as the sum of the $E_{grid_V}$ of every user. If the energies coincide, no actions are necessary, since the community is in a perfect balance between the energy surpluses and deficits of the users.

If, however, there is a deviation, the method provides for carrying out the following sub-steps:

- searching for users capable of providing flexibility, also partially, in the required direction ($E_{flex\_discharge\_V}$ to deliver, $E_{flex\_charge\_V}$ to store);
- verifying that these users also have the necessary flexibility in terms of power ($P_{flex\_discharge\_V}$ to deliver, $P_{flex\_charge\_V}$

to store) and otherwise trying to find it from other available users

- if flexibility has actually been found, recording the relevant transactions of the users involved vis-à-vis the community (so that remuneration may take place in the subsequent step) and updating the relevant $E_{flex\_discharge\_V}$ or $E_{flex\_charge\_V}$ for the subsequent time intervals of these users.

A fourth macro step is dedicated to calculating the costs and remuneration of the individual users based on:

- their virtual energy profile;
- contributions through demand response actions;
- contributions made to the community by means of flexibility in energy transactions;
- their share 4 in DERs.

The information calculated in the previous steps enables the creation of various remuneration mechanisms which are not an integral part of the aims of this invention.

In particular, the method provides for calculating an economic remuneration of said users as a function of said total energy $E_{grid\_community}$ exchanged with the electrical grid 100. The economic remuneration is divided among the users differently based on:

- the share 4 of energy assigned to them with respect to the total energy;
- the behaviour of the individual user in relation to the peaks of power drawn from the electrical grid 100;
- virtual transactions of the shares 4 of the individual user with respect to the energy community.

Virtual transactions are calculated in the following manner: (energy and/or power):

calculate the energy and power exchanges of the individual user with the grid 100, as if total self-consumption were implemented, through the own share 4 of storage 2 and production (example of calculation);
calculate the virtual energy flexibility of the individual during a predefined time interval (preferably at the end of the day);
identify the energy and power transactions of individual users vis-à-vis the community, quantifying the energy and power contribution of the individual user towards reaching the target or range of energy exchanged with the grid 100 to be reached.

The simple mechanism proposed here envisages specifying, in the period of remuneration for every user:

- The total energy virtually input $E_{tot\_input\_V}$;
- The total energy virtually drawn $E_{tot\_drawn\_V}$;
- The total energy supplied through demand response $E_{tot\_dr}$;
- The total energy virtually supplied, through energy transactions vis-à-vis the community, for collective self-consumption $E_{tot\_self}$-consumption_V;
- The total energy virtually supplied through energy transactions for ancillary services $E_{tot\_sv\_ancillary\_V}$;

As noted below, according to the utility supply agreements and local regulations, the community will have both expenses and income, which the mechanism envisages distributing using the aforesaid values. In particular:

- The maintenance expenses for the DERs can be distributed based on the shares 4 of the users 20.
- The expenses for the energy withdrawn by the community from the external grid 100 can be distributed among users based on the percentage that the $E_{tot\_drawn\_V}$ of the individuals represents out of the total drawn by the community.
- The income from the energy input by the community towards the external grid 100 may be distributed among all users based on the percentage that the $E_{tot\_input\_V}$ of the individuals represents out of the total input by the community.
- The income from incentives for collective self-consumption may instead by distributed by dividing the total incentivised energy into three categories:

   ◦ Self-consumed energy obtained by natural balancing within the community (without DR or transactions) and thus where the incentives are to be distributed among all users.
   ◦ Self-consumed energy obtained through DR and thus where the incentives are to be distributed among users based on their energy contribution in terms of DR.
   ◦ Self-consumed energy obtained through virtual energy transactions of users and thus where incentives are to be distributed among users based on their contribution in terms of energy and power flexibility.

- It is similarly possible to distribute the income from the supply of ancillary services.

Obviously, it is possible to use more advanced remuneration logics that also consider the price of energy actually present at the time of the various transactions.

As already mentioned, the object of the present invention is a system 1 for managing a group of shared electrical batteries 2 in an energy community, which comprises:

a group of electric batteries 2;
a plurality of different users 3 supplied alternatively by a share 4 of storage batteries 2 or the external electrical grid 100;
a control unit 5 connected to said group of electric batteries 2.

The control unit 5 is configured to implement the steps of the above-described method, which are set forth below.

The present invention achieves the set aims.

In particular, the present invention makes it possible to optimise the management of electric batteries 2 in an energy community, placing a priority on energy based on self-consumption, with regard to the energy community as a whole, as compared to the energy that can be drawn from the external electrical grid 100 irrespective of the virtualisation of the shares 4 of electrical energy assigned to the various users 20.

Furthermore, the present invention allows for optimising the management of the state of charge SoC of the shared batteries 2 in order to be able to provide ancillary or auxiliary services or simply to ensure certain state of charge SoC.

In addition, the present invention makes it possible to automate control of the shares 4 of the individual users 20 to optimise the common benefits according to the targets of collective self-consumption and ancillary services.

The sharing of energy among users 20 is not only aimed at economic transactions, but also makes it possible to reduce collective drawing from the grid 100 in order to exploit to a maximum the total energy contained in the batteries 2 and fairly distribute the economic benefit ("energy justice").

In other words, the present invention makes it possible to balance energy behaviour at a community level by imposing transactions of the individual users 20 which benefit the community. The system for controlling energy storage systems proposed in the present invention, furthermore, being based on collective targets and advantages rather than logics of optimisation of individual users, allows for charging and discharging dynamics of the shared systems which are more linear and thus reduces the consequent number of charging/discharging cycles, thereby optimising the state of health (SoH) of the batteries.

Finally, the present invention makes it possible to manage, in a virtually distributed manner, the energy resources potentially centralised in a single point within the abovementioned energy community. Thanks to the exchanges of energy and power taking place between the virtual shares of storage 2 according to the above-described terms, in fact, the resources behave as a VDER (virtually distributed energy resources) system.

This virtually distributed system provides many advantages to the users of the community since, given an equal capacity, it is always preferable to manage one large DER system compared to many small DERs (environmental sustainability, installation costs, maintenance costs, risks for users).

**Claims**

1. A method for managing shared energy resources in an energy community, wherein said energy community comprises a plurality of users (20) having one or more items of electrical equipment to be powered; said energy community defining a DER system and comprising shared batteries (2) for storing electrical energy and an apparatus (30) for the production of electrical energy, preferably renewable, connected with said batteries (2) so that the electrical energy produced can be stored in said batteries (2); said method comprising the following steps:

- assigning to each of the users a virtual share (4) of electrical energy production, deriving from said production apparatus (30), and a virtual share (4) of storage (2) of electrical energy of said shared batteries (2);
- calculating the total energy/power ($E_{grid\_community}$) that the community exchanges with an electrical grid (100) for the supply of electrical energy/power to which the users, the batteries (2) and the apparatus (30) for the production of energy/electrical power are connected; said total energy/power ($E_{grid\_community}$) being calculated according to the following formula: $E_{grid\_community} = \Sigma\, E_{grid\_i} + E_{prod} - E_{batt}$, wherein $E_{grid\_i}$ is the energy/power exchanged with the grid (100) by an i-th user, ($E_{prod}$) is the energy/power produced by the apparatus (30) for the production of electrical energy/power, and ($E_{batt}$) is the energy stored in the batteries (2);
- comparing the total energy/power exchanged with the grid (100) with a target ($E_{grid\_target}$) or range of energy/power exchanged with the grid (100) to be reached;

- if the total energy/power ($E_{grid\_community}$) exchanged with the grid (100) is different from said target or range ($E_{grid\_target}$), controlling said energy community so as to ensure that the total energy/power ($E_{grid\_community}$) exchanged with the grid (100) comes near to or is equal to said target or range ($E_{grid\_target}$); said control step being carried out in the following manner:

 o discharging into the grid (100) the energy stored in the batteries (2) so as to decrease the value of energy stored in the batteries (2) ($E_{batt}$) in order to increase the total energy/power exchanged ($E_{grid\_community}$);
 o charging the batteries (2) by means of said apparatus (30) for the production of electrical energy so as to increase the value of energy stored in the batteries (2) ($E_{batt}$) in order to lower the total energy exchanged ($E_{grid\_community}$);

**characterised in that** said step of controlling said energy community so as to ensure that the total energy ($E_{grid\_community}$) exchanged with the grid (100) comes near to or is equal to said target or range ($E_{grid\_target}$) is implemented irrespective of the exchanges made by the individual virtual shares (4) of production and storage (2) in relation to the electrical grid (100);
said method envisages a step of exchange between the shares (4) of energy of the individual users (20) within the energy community according to the energy needs of the individual user;
said method further envisages that said share (4) of storage (2) and/or share (6) of production is variable over time according to the producers-users (40) who are part of the energy community and who make their own production and storage of energy available in given periods of time;
said method further comprising a step of calculating an economic remuneration for said users as a function of said total energy ($E_{grid\_community}$) exchanged with the electrical grid (100); said economic remuneration being distributed among the users differently according to:

 - the share (4) of energy assigned to them relative to the total energy/power ($E_{grid\_community}$);
 - the behaviour of the individual user (20) in relation to the peaks of power drawn from the electrical grid (100);
 - virtual transactions of the shares (4) of the individual user (20) with respect to the energy community;

said virtual transactions being calculated by identifying the energy transactions of individual users (20) vis-à-vis the community and quantifying the energy contribution of the individual user (20) towards reaching the target or range ($E_{grid\_target}$) of energy exchanged with the grid (100) to be reached.

2. The method according to claim 1, wherein said share (4) of storage is a virtualisation carried out by software that manages the batteries (2) in such a way as to assign a variable share (4) irrespective of the physical structure with which the batteries (2) are made.

3. The method according to any one of the preceding claims, wherein said share of production (30) is a virtualisation carried out by software in order to include different virtual portions of production, each assigned to a respective user (20).

4. The method according to any one of the preceding claims, **characterised in that** it comprises a step of initially calculating, for every user (20) and relevant every time interval, the following:

 - Virtual energy produced ($E_{prod\_v}$) by subdividing the total produced in the time interval by the DERs according to the share (4) of the user (20);
 - Virtual energy delivered or stored ($E_{batt\_v}$) by the share (4) of battery storage (2) and using the share (4) of average stored power (2) available in the time interval;
 - Energy virtually exchanged with the grid (100) in the time interval ($E_{grid\_v}$).

5. The method according to claim 4, wherein said virtual energy delivered or stored ($E_{batt\_v}$) by the share (4) of storage (2) is calculated as follows:

$$E_{batt_v} = \begin{cases} -\min\left(E_{cons_v} - E_{prod_v}, E_{storable}\right), & E_{prod_v} < E_{cons}\ i.e.\ batteries\ discharging \\ \min\left(E_{prod_v} - E_{cons_v}, E_{deliverable}\right), & E_{prod_v} \geq E_{cons}\ i.e.\ batteries\ charging \end{cases}$$

wherein:

- $E_{storable}$ is equal to the energy obtained by applying the maximum share (4) of charge power in the desired time interval if that quantity does not result in an excess of the share (4) of storage (2) of the user (20), otherwise it will be equal to the energy that can be stored until saturation of the share;

- $E_{deliverable}$ is the energy dischargeable through the maximum share (4) of discharge power in the time interval if that value is available in the share (4) of storage (2) of the user (20), otherwise it will be equal to the energy that can be delivered until the share is exhausted;

- $E_{consv}$ is the virtual energy consumed by the user (20).

6. The method according to claim 4 or 5, wherein the energy virtually exchanged ($E_{grid\_V}$) with the grid (100) may be calculated as follows: wherein said energy virtually exchanged ($E_{grid\_V}$) with the grid (100) is a negative value in the case of drawing from the grid and positive in the case of input, whereas the virtual energy delivered or stored ($E_{batt\_v}$) by the share (4) of battery storage (2) is a negative value during discharge from the battery, and positive when it is being charged.

7. The method according to one of claims 4 to 6, **characterised in that** it comprises a step of calculating the virtual state of charge (SoCv) and corresponding energy available in the share (4) of storage (2) in every time instant by adding together the virtual energy contributions from the battery.

8. The method according to any one of the preceding claims, wherein said step of controlling said energy community envisages a further step of disconnecting the apparatus (30) for the production of electrical energy from the electrical grid (100) so as to decrease the value of energy produced by the apparatus 30) ($E_{prod}$) in order to decrease the total energy exchanged (Egrid_community).

9. The method according to any one of the preceding claims, comprising a step of exchanging electrical energy between the shares (4) of the individual users (20) within the energy community according to the energy needs of the individual user.

10. The method according to any one of the preceding claims,

$$E_{grid_V} = E_{prod_V} - E_{cons} - E_{batt_V}$$

comprising a step of exchanging electrical power between the shares (4) of the individual users (20) within the energy community according to the electrical power delivery needs of the individual user.

11. The method according to any one of the preceding claims, **characterised in that** it comprises a step of calculating at least the following flexibility values:

- $E_{flex\_discharge\_V}$, which defines the discharge energy that can be supplied to other users in the community;
- $E_{flex\_charge\_V}$, which defines the charge energy that can be received from other users in the community;
- $P_{flex\_discharge\_V}$, which defines the maximum average discharge power that can be transferred to other users in the community;
- $P_{flex\_charge\_V}$, which defines the maximum average charge power that can be transferred to other users in the community.

12. The method according to claim 11, **characterised in that** it comprises a step of calculating, by means of an algorithm, the discharge energy ($E_{flex\_discharge\_V}$) based on the energy available at the end of the day ($E_{avail\_end\_day}$) in the share (4) of the user (20).

13. The method according to one of claims 11 and 12, **characterised in that** it comprises a step of calculating, by means of an algorithm, the charge energy ($E_{flex\_charge}$) based on the storable energy at the end of the day ($E_{storable\_end\_day}$) in the share (4) of the user (20.

14. The method according to one of claims 11 to 13, **characterised in that** the calculation of the maximum average discharge power ($P_{flex\_discharge}$) and the maximum average charge power ($P_{flex\_charge}$) takes place for every user (20) and every time instant as a subtraction between the share (4) of maximum charge/discharge power and the actual average power used by the user (20) in a reference time interval.

15. A system for managing shared energy resources in an energy community, wherein said energy community comprises a plurality of users (20) having one or more items of electrical equipment (3) to be powered; said energy community defining a DER system and comprising shared batteries (2) for storing electrical energy and an apparatus (30) for the production of electrical energy, preferably renewable, connected with said batteries (2) so that the electrical energy produced can be stored in said batteries (2); said system comprising a control unit (5) connected to said users, to said batteries (2) and to said production apparatus (30); said control unit (5) being configured to implement the method according to any one of the preceding claims.

Fig. 1

```
                              ┌──────────────────────┐
                              │    CALCULATION       │
                              │    Pgrid_target      │
                              └──────────┬───────────┘
                                         │
                                         ▼
       ┌──────────────┐       ┌──────────────────────┐
       │     YES       │◄──────│  Pgrid_community =    │
       └──────────────┘       │   Pgrid_target ?      │
                              └──────────┬───────────┘
                                         │
                                         ▼
                              ┌──────────────────────┐
                              │         NO           │
                              └──────────┬───────────┘
                                         │
                                         ▼
                              ┌──────────────────────┐
                              │   USE DERs TO        │
                              │   COMPENSATE         │
                              └──────────┬───────────┘
                                         │
                                         ▼
       ┌──────────────┐       ┌──────────────────────┐
       │     YES       │◄──────│   ALL                │
       └──────────────┘       │   COMPENSATED ?      │
                              └──────────┬───────────┘
                                         │
                                         ▼
                              ┌──────────────────────┐
                              │         NO           │
                              └──────────┬───────────┘
                                         │
                                         ▼
                              ┌──────────────────────┐
                              │      TRY DR          │
                              └──────────┬───────────┘
                                         │
                                         ▼
                              ┌──────────────────────┐
                              │   RECORD DR          │
                              │   TRANSACTIONS       │
                              └──────────┬───────────┘
                                         │
                                         ▼
       ┌──────────────┐       ┌──────────────────────┐
       │     YES       │◄──────│   IS IT              │
       └──────────────┘       │   SUFFICIENT ?       │
                              └──────────┬───────────┘
                                         │
                                         ▼
                              ┌──────────────────────┐
                              │         NO           │
                              └──────────┬───────────┘
                                         │
                                         ▼
       ┌──────────────┐       ┌──────────────────────┐
       │     NO        │◄──────│   MAKES SENSE TO     │
       └──────────────┘       │   COMPENSATE         │
                              │   FROM GRID ?        │
                              └──────────┬───────────┘
                                         │
                                         ▼
                              ┌──────────────────────┐
                              │        YES           │
                              └──────────┬───────────┘
                                         │
                                         ▼
                              ┌──────────────────────┐
                              │   COMPENSATE         │
                              │   FROM GRID          │
                              └──────────────────────┘
```

Fig. 2

Fig. 3

Fig. 4

Europäisches
Patentamt

European
Patent Office

Office européen
des brevets

# EUROPEAN SEARCH REPORT

**Application Number**

EP 25 17 0088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 117 871 A (UNIV FUDAN) 24 November 2023 (2023-11-24) * paragraphs [0011], [0024], [0028], [0065], [0117] - [0120], [0125]; figures 1,2 * | 1-15 | INV. H02J3/32<br><br>ADD. H02J3/00 H02J3/14 H02J3/38 |
| A | CN 117 081 172 A (SHENZHEN ECOFLOW INNOVATION TECH CO LTD) 17 November 2023 (2023-11-17) * paragraphs [0059] - [0065] * | 1-15 | |
| A | EP 4 075 623 A1 (SIEMENS AG OESTERREICH [AT]) 19 October 2022 (2022-10-19) * paragraphs [0013], [0017], [0018], [0040]; figures 1,2 * | 1-15 | |
| A | COLETTA GUIDO ET AL: "Optimal Design of Energy Communities in the Italian Regulatory Framework", 2021 AEIT INTERNATIONAL ANNUAL CONFERENCE (AEIT), AEIT, 4 October 2021 (2021-10-04), pages 1-6, XP034036936, DOI: 10.23919/AEIT53387.2021.9626852 * the whole document * | 1-15 | TECHNICAL FIELDS SEARCHED (IPC)<br><br>H02J |
| A | WO 2015/018465 A2 (NEC EUROPE LTD [DE]) 12 February 2015 (2015-02-12) * abstract * | 1-15 | |

-/--

The present search report has been drawn up for all claims

| Place of search | Date of completion of the search | Examiner |
|---|---|---|
| Munich | 1 September 2025 | Ríos Báez, Abel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 25 17 0088

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DI SILVESTRE MARIA LUISA ET AL: "Energy self-consumers and renewable energy communities in Italy: New actors of the electric power systems", RENEWABLE AND SUSTAINABLE ENERGY REVIEWS, ELSEVIERS SCIENCE, NEW YORK, NY, US, vol. 151, 27 August 2021 (2021-08-27), XP086813165, ISSN: 1364-0321, DOI: 10.1016/J.RSER.2021.111565 [retrieved on 2021-08-27] * the whole document * | 1-15 | |
| A | FIORITI DAVIDE ET AL: "Optimal sizing of energy communities with fair revenue sharing and exit clauses: Value, role and business model of aggregators and users", APPLIED ENERGY, ELSEVIER SCIENCE PUBLISHERS, GB, vol. 299, 1 July 2021 (2021-07-01), XP086728996, ISSN: 0306-2619, DOI: 10.1016/J.APENERGY.2021.117328 [retrieved on 2021-07-01] * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 1 September 2025 | Ríos Báez, Abel |

## ANNEX TO THE EUROPEAN SEARCH REPORT
## ON EUROPEAN PATENT APPLICATION NO.

EP 25 17 0088

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2025

| Patent document cited in search report | | Publication date | Patent family member(s) | | Publication date |
|---|---|---|---|---|---|
| CN 117117871 | A | 24-11-2023 | NONE | | |
| CN 117081172 | A | 17-11-2023 | NONE | | |
| EP 4075623 | A1 | 19-10-2022 | NONE | | |
| WO 2015018465 | A2 | 12-02-2015 | EP | 3031114 A2 | 15-06-2016 |
| | | | JP | 6281156 B2 | 21-02-2018 |
| | | | JP | 2016527864 A | 08-09-2016 |
| | | | WO | 2015018465 A2 | 12-02-2015 |

EPO FORM P0459

For more details about this annex : see Official Journal of the European Patent Office, No. 12/82